# EUROPEAN PATENT SPECIFICATION

(11) **EP 3 202 010 B1**
(45) Date of publication and mention of the grant of the patent: **12.02.2020**
(21) Application number: 15847999.8
(22) Date of filing: 06.10.2015
(51) Int. Cl.: H02J 7/02, H02J 50/00, H02J 50/80, H01Q 1/24

(54) **COMBINED RF CHARGING AND COMMUNICATION MODULE AND METHODS OF USE**
KOMBINIERTES HF-LADE- UND KOMMUNIKATIONSMODUL SOWIE VERFAHREN ZUR VERWENDUNG
MODULE RF COMBINÉ DE CHARGE ET DE COMMUNICATION ET PROCÉDÉS D'UTILISATION

(30) Priority: 01.10.2014 US 201462058115 P
(43) Date of publication of application: 09.08.2017
(73) Proprietor: Humavox Ltd., 4464008 Kfar-Saba (IL)
(72) Inventor: MANOVA-ELSSIBONY, Asaf, 6967226 Tel-Aviv (IL)
(74) Representative: Loo, Chi Ching
(86) International application number: PCT/IL2015/050992
(87) International publication number: WO 2016/051415

(56) References cited:
- WO-A1-2013/180399
- US-A1- 2010 142 509
- US-A1- 2011 266 880
- US-A1- 2013 033 118
- US-A1- 2014 035 521
- US-A1- 2014 159 646
- US-A1- 2014 269 886

## Description

### CROSS-REFERENCE TO RELATED APPLICATION

The present PCT application claims priority to United States provisional patent application 62/058,115 filed 01 October 2014, entitled "Combined RF Charging System and Communication System."

### TECHNOLOGICAL FIELD

The subject matter disclosed herein is related to solutions for coexistence of wireless RF charging unit together with a communication unit in a manner that safe operation of the two units in similar/identical frequencies is allowed, and further, that the two units share common structures such as antenna. More particularly, the invention is directed to a combined communication and charging module configured to be incorporated within a wireless rechargeable device.

### BACKGROUND

Wireless charging is a relatively new arena that still requires adaptation of various sub-systems and units within the device to be charged in order to obtain an efficient charging process and yet, not to damage other components within the wireless rechargeable device (also denoted hereinafter as: "device under charge (DUC)" during the charging process.

For example, when charging in high level transmission values of RF energy, a communication unit within the device under charge may receive some of the transmitted power for charging and consequently may be damaged. The invention in one aspect provides a solution for such a scenario.

Another leading trend in the technological world of today that requires attention is the miniaturization of things as well as the connectivity of daily products to smart devices known as the "Internet Of Things". For this purpose, electrical circuits and communication abilities should be implemented within daily used products in a manner that minimal changes with the structure of the product will be made. In order to efficiently assemble the electrical component, and further to save space there is an attempt to use various components commonly for different units/modules. The invention in a further aspect provides a solution for this need by providing a combined charging and communication module in which, the charging unit and the communication unit are sharing a common antenna. The common antenna is configured to operate as an RF antenna so as to allow charging of the electronic device and also to operate as a data communication antenna so as to allow transmission of data to the surroundings and receiving of data from the surroundings. Such combination is not a trivial matter as operation of both units in similar/identical frequencies may cause damage to the communication unit/module that is configured to operate in substantially lower power levels.

Attempts to combine a charging unit/module with a communication unit/module are known in the art. Such attempts are disclosed in the following patent applications: WO 2015022450, WO 2013172530, US 2015042170, US 2014210276, and US 2010/0142509.

In one aspect, the invention is aimed to provide a combined communication and charging module sharing a common antenna, and configured to operate in adjacent/identical frequency band. The combined module is configured and operable to allow normal functioning of the communication unit and prevent damages that may occur to said unit in high level transmission values during charging. By sharing electrical components and providing them at least dual functionality within the chargeable device, contribute to reduce cost and save limited space.

### SUMMARY

In accordance with one aspect of the invention, and as defined by the features of independent claim 1, there is provided a combined charging and communication module for a wireless rechargeable device configured to allow radio frequency (RF) charging and data transceiving in an identical frequency or adjacent frequencies, said combined communication and charging module comprising a charging unit and a communication unit, both units are sharing a common antenna, wherein the operation of said units is performed alternately and determined by an environmental effect; wherein said environmental effect is the presence or absence of a wireless charging device and the creation of a charging zone in the surroundings of said combined communication and charging module such that said common antenna is within or outside said charging zone; the presence of said common antenna within said charging zone functionally affects the impedance of said common antenna to match with the impedance of the charging unit and to allow wireless charging of a rechargeable device, and further to mismatch with the impedance of the communication unit to limit or attenuate signals reception by the communication unit; and the absence of a charging zone in the surroundings of said common antenna affects the impedance of said common antenna to match with the impedance of said communication unit and to allow data transceiving, and further to mismatch with the impedance of said charging unit to limit or attenuate signals reception by the charging unit. The combined charging and communication module may be configured to be integrated in a rechargeable device, also denoted hereinafter "device under charge (DUC)" to allow the DUC wireless recharging and communication abilities while minimizing the production costs and the space required for integrating such separated modules.

The charging unit, also denoted interchangeably below as "RF power receiving unit" may be configured to receive high level RF power signals from the common antenna and to rectify the signals to a DC voltage for charging the DUC upon positioning of the DUC in a suitable surroundings for charging i.e. within or onto a wireless charging device in a manner that the DUC is within a charging zone. Wireless charging devices as well as the created charging zone is described in details in our PCT applications, published as WO2013/179284, and WO2015/022690.

The communication unit, also denoted interchangeably below as "data transiving unit", "data communication unit" and "TRX Data" is configured to allow the DUC communication abilities i.e. transmitting and receiving data from and to the surroundings. The components of the communication unit are configured to operate in low power level signals as high power level may cause damage to the communication circuit. Thus, in order to allow proper and safe functioning of the combined module it is important to functionally separate between the two units. The present invention provides dual level of isolation solution. First by the environment surrounding the DUC and optionally further by a power filter sorting the received signal by its power level.

The reflected impedance of the common antenna of the combined module is influenced by the environmental condition and change according to the surroundings of the DUC, wherein the DUC may be positioned in a free space setup or it may be positioned within a wireless charging device (when it is a close or semi-close chamber) or onto the wireless charging device (when it is designed as a charging surface).

By "Free space set up", we mean that the antenna impedance is not influenced by the surrounding and met the required condition for receiving and transmitting electromagnetic radiation without the influence of a charging zone boundaries, i.e. that the DUC is positioned outside of a charging zone.

The operation of said units may be further performed alternately and determined by filtering of signals received according to their strength. In some embodiments, the filtering of signals received according to their strength may be obtained by a power filter functionally attached to said common antenna and to said charging and communication units, wherein said power filter may be configured to pass the signals received either to the communication unit or to the charging unit according to a predetermined power levels such that low power signals suitable for communication are being passed to said communication unit, while high power signals suitable for charging are being passed to said charging unit.

In the absence of a charging zone in the surroundings of said common antenna the power filter may be configured to pass low power signals from said common antenna to said communication unit by matching the operation range impedance of said communication unit to the impedance of said common antenna. Alternatively, in the presence of a charging zone in the surroundings of said common antenna said power filter may be configured to pass high power signals from said common antenna to said charging unit by matching the operation range impedance of said charging unit to the impedance of said common antenna.

The present invention may be further directed to a rechargeable device comprising a combined communication and charging module according to the above described embodiments.

Yet, a background example may also be directed to a power filter configured to selectively pass signals according to their power level to a communication unit or to a charging unit sharing a common signals source in a combined charging and communication module of a rechargeable device, said power filter may be configured to pass low power signals received by matching between the impedance of the operation range of said communication unit to the impedance of the common signal source, and further to pass high power signals received by matching between the impedance of the operation range of said charging unit to the impedance of the common signals source. In a specific example, the impedance of the common signals source may be constant (i.e. is not being changed by the power level of the signal).

The invention may be further directed to a method for enabling RF wireless charging and data transceiving in adjacent/identical frequency band of a wirelessly rechargeable device having a combined communication and charging module according to the above-discussed invention, said method comprising the following steps: (a) positioning said wirelessly rechargeable device away from a charging zone so as to allow said common antenna to operate as a communication antenna; and (b) positioning said wirelessly rechargeable device within/onto a wireless charging device so as to allow said common antenna to operate as a RF charging power receiving antenna.

### BRIEF DESCRIPTION OF THE DRAWINGS

Examples illustrative of embodiments of the disclosure are described below with reference to drawings attached hereto. The accompanying drawings, which are incorporated in and constitute a part of this specification, show certain aspects of the subject matter disclosed herein and, together with the description, help explain some of the principles associated with the disclosed implementations. In the drawings, identical structures, elements or parts that appear in more than one figure are generally labeled with the same numeral in all the drawings in which they appear. Dimensions of components and features shown in the drawings are generally chosen for convenience and clarity of presentation and are not necessarily shown to scale. Many of the figures presented are in the form of schematic illustrations and, as such, certain elements may be drawn greatly simplified or not-to-scale, for illustrative clarity. The drawings are listed below.
**Figure 1A** is a schematic diagram illustrating major components of a combined communication and charging module having RF power unit and high level communication unit sharing a common antenna, said module is integrated within a DUC in a free space setup.
**Figure 1B** is a schematic diagram illustrating the impedances reflected from the combined module units illustrated in Figure 1A: the reflected impedance of the RF power receiving unit ZRXP, the reflected impedance of the communication unit ZTRXD, and the reflected impedance of the common antenna ZCANT, all in a free space setup.
**Figures 1C, 1D and 1E** are Smith charts illustrating the impedance of the data communication antenna ZTRXD, the RF power unit ZRXP, and the common antenna ZCANT respectively, in the free space setup illustrated in figure 1A.
**Figure 1F and 1G** are graphs illustrating the units return loss S33 and S22 of the communication unit TRXD and the RF power receiving unit RXP respectively, in the free space setup of figure 1A.
**Figure 1H and 1I** are graphs illustrating the insertion loss S31 between the communication module TRXD and the common antenna CANT, and the insertion loss S21 between the RF power receiving unit RXP and the common antenna CANT respectively, in the free space setup of figure 1A.
**Figure 2A** is a schematic diagram illustrating the DUC of Figure 1A with the combined communication and charging module sharing a common antenna positioned in the vicinity or within a wireless charging device having RF power transmitting unit (within a charging zone setup).
**Figure 2B** is a schematic diagram illustrating the impedances reflected from the RF power transmitting antenna ZTXA and the power transmitter ZTXP of the transmitting unit, and the impedances reflected from the common antenna Z'CANT, the RF receiving unit ZRXP, and the communication unit ZTRXD in the new setup illustrated in figure 2A.
**Figures 2C, 2D and 2E** are Smith charts illustrating the impedance of the data communication antenna ZTRXD, the impedance of the RF power unit ZRXP, and the impedance of the common antenna Z'CANT of Figure 2B respectively, when the DUC is within the charging zone.
**Figure 2F and 2G** are graphs illustrating the units return loss S33 and S22 of the data communication unit TRXD and the RF power receiving unit RXP respectively, while in the vicinity or within a charging device (within a charging zone setup).
**Figure 2H and 2I** are graphs illustrating the insertion loss S31 and S21 between the common antenna CANT and the data communication unit TRXD, and between the common antenna CANT and the RF power receiving unit RXP respectively, when the DUC is within the charging zone setup.
**Figure 3A** is a schematic diagram illustrating major components of a combined communication and charging module integrated within a DUC, wherein the combined module comprises RF receiving power unit RXP and a communication unit TRXD sharing a common antenna connected to a Power filter in a free space setup.
**Figure 3B** is a schematic diagram illustrating the impedance reflected from the units illustrated in Figure 3A in a free space set-up, wherein ZCANT is the impedance reflected from the common antenna, ZPF is the impedance of the power filter when the received signal power level is in the range of (-85) to (-10) dbm, ZTRXD is the impedance of the data communication unit, and ZRXP is the impedance reflected from the RF power receiving unit.
**Figures 3C, 3D and 3E** are Smith charts illustrating the impedances of the data communication unit ZTRXD, the RF power unit ZRXP, and the common antenna ZCANT respectively, in the free space setup illustrated in figure 3A.
**Figure 3F and 3G** are graphs illustrating the return loss S33 and S22 of the communication unit TRXD and the RF power receiving unit RXP respectively, in the free space setup of figure 3A, wherein the additional effect of the power filter (solid line) over the environmental effect (dotted line) is shown.
**Figure 3H and 3I** are graphic illustrations of the insertion loss S31 and S21 in the free space set up of Figure 3A between the communication unit TRXD and the Common antenna CANT connected to the power filter, and between the RF power receiving unit RXP and the common antenna CANT connected to the power filter respectively, wherein the additional effect of the power filter (solid line) over the environmental effect (dotted line) is shown.
**Figure 4A** is a schematic diagram illustrating the DUC illustrated in Figure 3A having a combined communication and charging module sharing a common antenna connected to a power filter, in a charging zone setup, i.e. when the DUC is positioned in the vicinity or within a charging device having RF power transmitting module, in a manner that at least the common antenna is positioned within a charging zone.

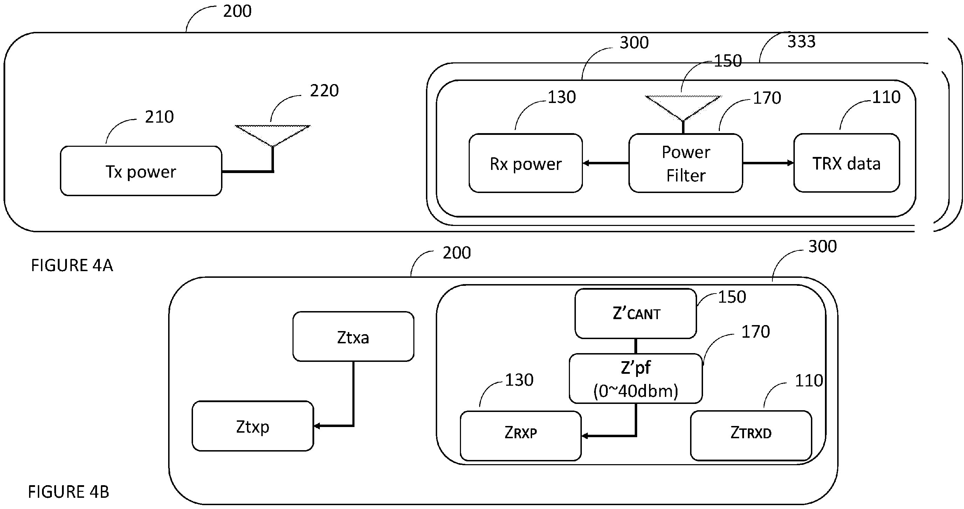

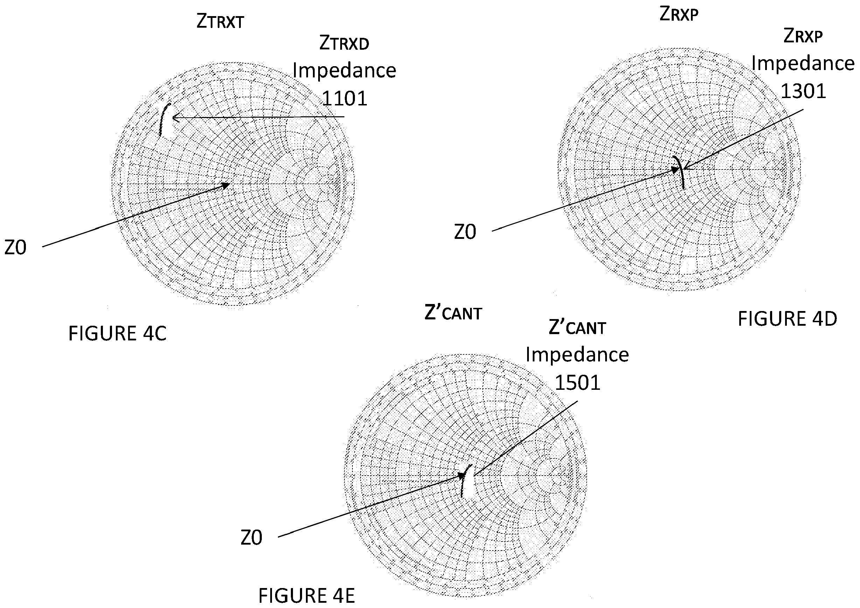

**Figure 4B** is a schematic diagram illustrating the impedance reflected from the components illustrated in Figure 4A, wherein ZTXA and ZTXP are the impedances of reflected from the RF transmitting antenna and from the power transmitter of the RF transmitting unit, Z'CANT is the impedance reflected from the common antenna connected to the power filter, Z'pf is the impedance reflected from the power filter while the received signal power is in the range of (0) to (40) dbm, ZRXP is the impedance reflected from the RF receiving unit, and ZTRXD is the impedance reflected from the communication unit, all in the setup illustrated in figure 4A within the charging zone.
**Figures 4C, 4D and 4E** are Smith charts illustrating the impedances of the data communication unit ZTRXD, the RF power receiving unit ZRXP, and the common antenna Z'CANT of Figure 4B respectively in the charging zone set up.
**Figure 4F and 4G** are graphs illustrating the units return loss S33 and S22 of the data communication unit TRXD and the RF power receiving unit RXP respectively, while in the vicinity of a charging device (dotted lines) and with the additional effect of the power filter (solid lines).
**Figure 4H and 4I** are graphs illustrating the units insertion loss S31 and S21 between the communication unit TRXD and the common antenna CANT, and between the RF power receiving unit RXP and the common antenna CANT respectively, while the DUC is positioned in the vicinity or within a charging device (dotted lines), and with the additional effect of the power filter (solid lines).
**Figure 5** is a schematic block diagram of a power filter.
**Figure 6** is a schematic illustration of the combined communication and charging module with the power filter of figures 3 and 4 showing the impedance behavior of the power filter, the communication unit and the charging unit depending on the power level of the received signal.
**Figure 7** is a graphical illustration showing a dual level isolation effect between the communication unit and the charging unit of the combined module achieved by a first isolation by the environment in the surroundings of the DUC containing the combined module and, by a second isolation achieved by the power filter that functionally enables the two units to operate in a similar or identical frequencies and to share a common antenna without damaging the communication unit while charging.

### DETAILED DESCRIPTION

The subject matter disclosed herein is directed to a combined charging and communication module sharing a common antenna that is configured to be incorporated within a wireless rechargeable device wherein, the charging unit is configured and operable to allow normal functioning of the communication unit and prevent damages that may occur in high power level transmission values. This may be achieved by designing the combined module in a manner that the impedance of the common antenna changes in correlation with the changes in the environment setup, in which the rechargeable device is positioned. Upon changing the location of the rechargeable device from a free space setup to a charging device setup, the impedance of the common antennas changes in a manner that the antenna is matched/mismatched to the communication unit/charging unit so as to prevent damages that may occur to the communication unit at high power levels.

A background example may further be directed to a power filter that is configured to improve the impedance match of the units according to the power levels of the received signals and to allow a dual isolation between the units in the combined module although they share a common antenna and configured to operate in an adjacent/identical frequency band.

Thus, a combined communication and charging module for a wireless rechargeable device configured to allow RF charging and data transceiving in an adjacent/identical frequency is provided. The combined communication and charging module comprising a charging unit and a communication unit, both units are sharing a common antenna, wherein the operation of said units is performed alternately and determined by an environmental effect. The operation of the units may further be performed alternately and determined by filtering of signals received according to their strength.

As a background example, there may be provided a power filter configured to selectively pass signals according to their power level to a communication unit or to a charging unit sharing a common signals source in a combined charging and communication module of a rechargeable device, said power filter is configured to pass low power signals received by matching between the impedance of the operation range of said communication unit to the impedance of the common signal source, and further to pass high power signals received by matching between the impedance of the operation range of said charging unit to the impedance of the common signals source.

The invention is further directed to a method for enabling RF wireless charging and data transceiving in adjacent/identical frequency band of a wirelessly rechargeable device having a combined communication and charging module according to the invention of claim 1, said method comprising the following steps: (a) positioning said wirelessly rechargeable device away from a charging zone so as to allow said common antenna to operate as a communication antenna; and (b) positioning said wirelessly rechargeable device within/onto a wireless charging device so as to allow said common antenna to operate as a RF charging power receiving antenna.

Following is a description, by way of example only and with reference to the accompanying figure which are a diagrammatic representation, of one method of carrying the current subject matter into effect.

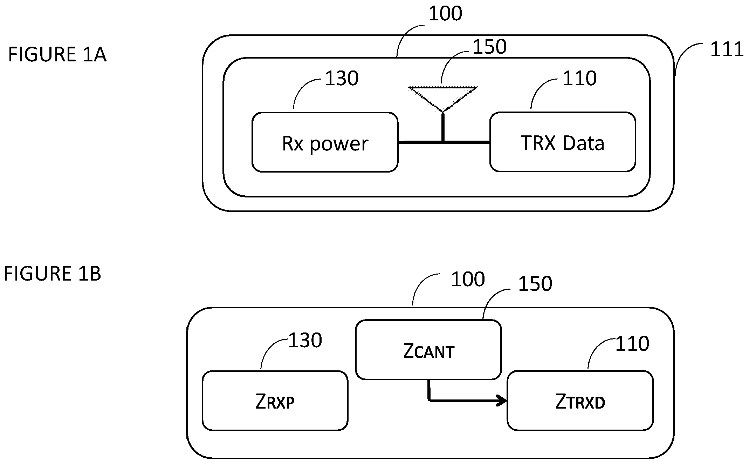

Figure 1A-1I describe a free space setup of a combined module having RF charging unit and communication unit sharing a common antenna, integrated in a DUC, wherein the common antenna is configured to serve as a communication antenna and as a receiving charging power antenna in a similar/identical frequencies.

Figure 1A is a schematic diagram illustrating major components of a combine communication and charging module 100 having RF power receiving unit 130 and high level communication unit 110 sharing a common antenna 150, wherein the combined module 100 is configured to be integrated within a wireless chargeable device 111. Common antenna 150 is configured to function as a communication antenna and to receive and transmit data to and from the transceiving unit 110 and further to serve as the receiving antenna and to deliver RF power to the power receiving unit 130 according to the environmental conditions it the surroundings of DUC 111, i.e. depending on the presence or absence of a wireless charging device and a functional charging zone.

In the setup illustrated in this figure, the DUC 111 is positioned in a free space setup. The condition of the common antenna and the reflected impedance of each one of the component in this setup is illustrated in Figure 1B. As shown in the figure, in a free space setup, the data transceiving unit 110 ZTRXD is matched to the impedance of the common antenna ZCANT and reflecting impedance ZTRXD, while the RF power receiving unit 130 is unmatched to the common antenna and reflecting impedance ZRXP. In this situation no charging occurs and the DUC may only receive and transmit data.

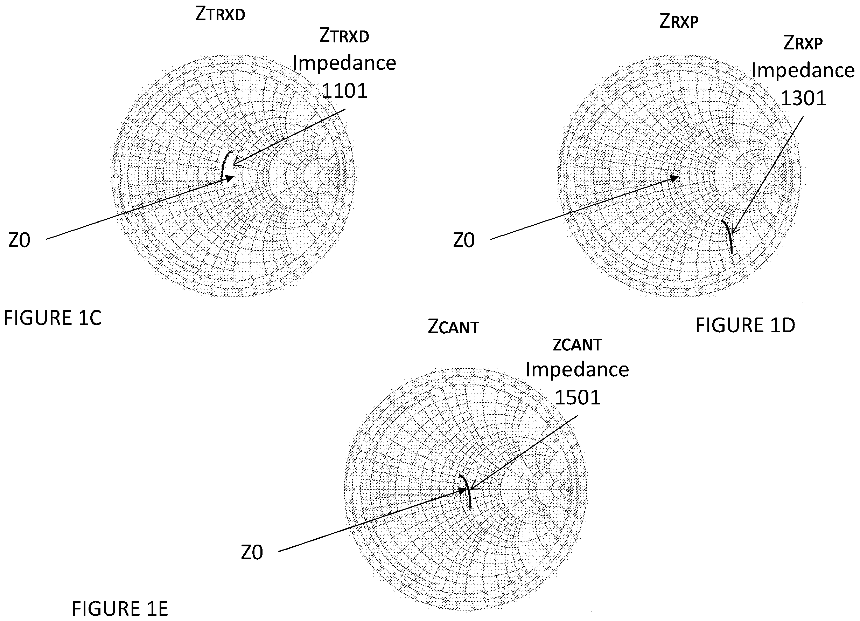

This condition is graphically illustrated by the Smith charts of Figures 1C-1E. Transceiving unit 110 in this setup is matched to the common antenna and thus, the transceiving unit impedance ZTRXD 1101 is close to Z0 as shown on the Smith chart as a curve positioned near the center point Z0 of the Smith chart meaning proper data transfer (Fig. 1C). At the same setup, the RF power receiving unit 130 is located outside a charging zone and therefore, this unit is unmatched to the common antenna 150. In this set up the receiving unit impedance ZRXP 1301 is not equal to Z0 and indicated as a curve positioned away from the center point Z0 of the Smith chart meaning that no power is received by the power receiving unit (Fig. 1D). The impedance of common antenna ZCANT 1501 is Z0 as illustrated in Fig. 1E. In this setup, the common antenna is matched to the data transceiving unit (the communication unit) and thus, ZCANT is represented on the Smith chart as a curve positioned at the center point Z0 of the Smith chart meaning the common antenna impedance is matched to the communication unit impedance and that proper data transfer occurs between the antenna and the communication unit.

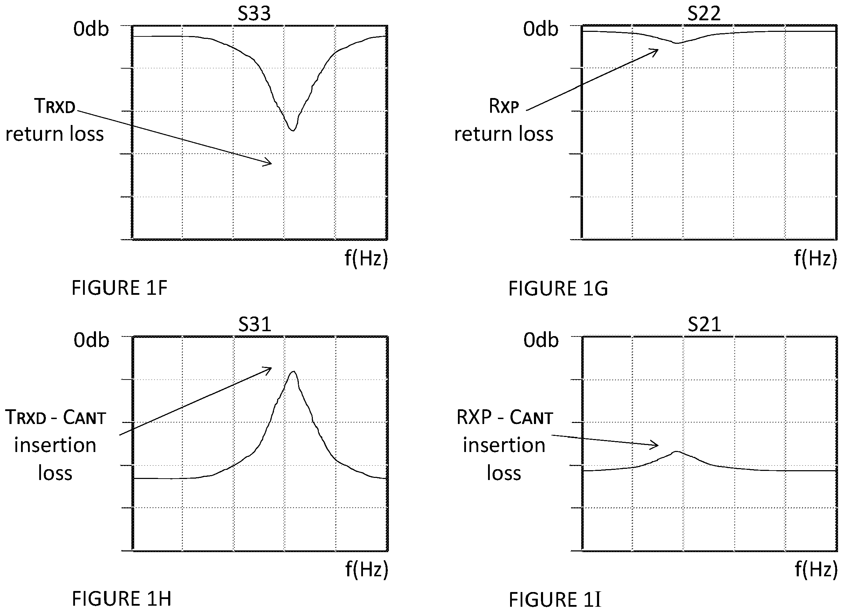

Figures 1F and 1G are graphs illustrating the return loss values in the matched and unmatched conditions of the communication unit and the power receiving unit respectively in a free space setup for a given frequency band, i.e., when the DUC is positioned outside of a charging zone. In this setup, the value and pattern obtained for the communication unit TRXD return loss S33 (db) indicates match condition between the transceiver of the communication unit and the common antenna meaning that negligible amount of the incident power is being reflected back. In contrast, the power receiving unit RXP return loss S22 value is close to 0db and the pattern obtained indicates unmatched condition meaning that most of the incident power received from the common antenna is reflected back. Thus, in free space the common antenna functionally operates as a communication antenna and no substantial charging is enabled.

Figure 1H and 1I are graphs illustrating the insertion loss S31 between the communication unit TRXD and the common antenna CANT, and the insertion loss S21 between the RF power receiving unit RXP and the common antenna CANT respectively, in the free space setup of figure 1A. In this setup, most of the power received from the antenna is delivered to the communication unit and thus, the insertion loss value is minimal (close to 0db). As such, the insertion loss S21 value between the RF power receiving unit RXP and the common antenna CANT is relatively high since only negligible power received from the common antenna is delivered to the power receiving unit and most of the power is reflected back to the antenna.

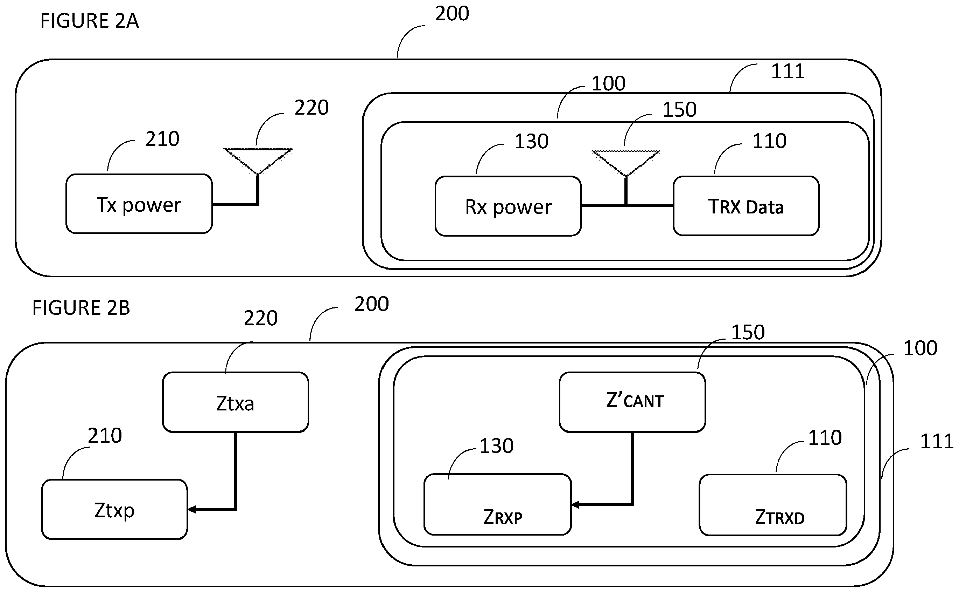

Figure 2A illustrate the DUC 111 of figure 1A having the combined communication and charging module 100 comprising a data communication unit and RF power receiving unit sharing a common antenna, in a setup where the DUC 111 is positioned within or onto a wireless charging device 200 depending on the structure and the shape of charging device 200 if it is a closed, semi closed compartment or a surface. In this setup, DUC 111 is positioned within the charging zone in a proximity to transmitting unit 210 and transmitting antenna 220.

The new setup affects the impedances reflected from the components as illustrated in Figure 2B. In such condition, the impedance of transmitting unit (Ztxa of the transmitting antenna 220 and Ztxp of the transmitter 210) is matched to transmit RF power. The impedance of the common antenna 150 changes to Z'CANT and it is now matched to the impedance reflected from the RF power receiving unit ZRXP as both antennas, the common antenna and the RF Power transmitting antenna, are within the charging zone and coupling between them occurs. At this setup, the common antenna 150 functions as a receiving antenna and charging may occur. At this setup, the impedance reflected from the communication unit 110 ZTRXD is in an unmatched condition with the common antenna 150, thus no transmission of data or receipt of data to and via common antenna 150 is possible.

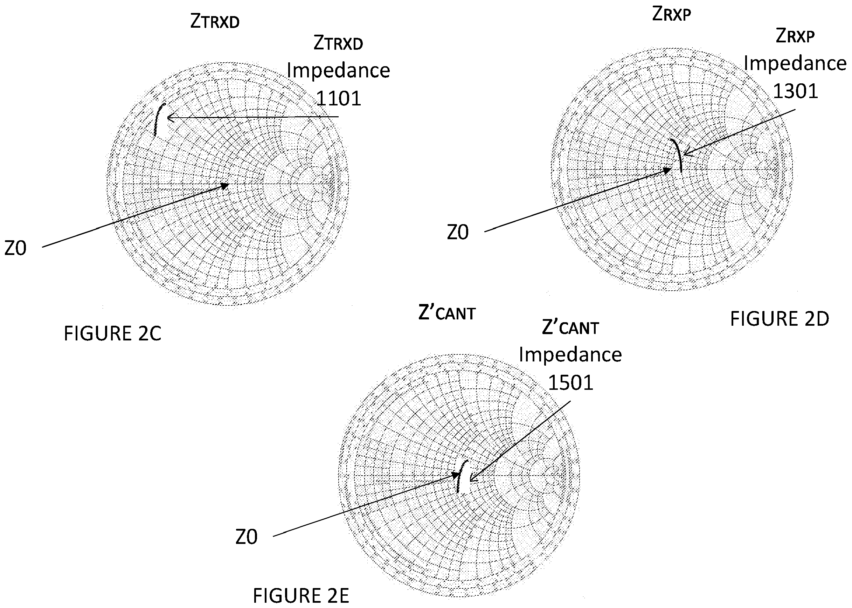

This condition is graphically illustrated by the Smith charts of Figures 2C-2E, wherein ZTRXD 1101 indicates the impedance of communication unit 110; ZRXP 1301 indicates the impedance of RF power receiving unit 130; and Z'CANT 1501 indicates the impedance of common antenna 150 within a charging zone. In this setup, ZTRXD 1101 is far from the center point Z0 of the Smith chart indicating that the communication unit is unmatched to the common antenna, while the RF power receiving unit 130 and common antenna 150 are matched. The reflected impedance ZRXP 1501 of the RF power receiving unit is shown on the Smith chart as curve that is placed near the center point ZO of the charts indicating good match condition and the reflected impedance of the common antenna Z'CANT 1301 is shown on the Smith chart as a curve that is placed on the center point ZO of the chart indicating match conditions. The position of the curves on the Smith chart mean that there is a proper power transfer from the common antenna 150 to the power receiving unit 130 and negligible power transfer to the communication unit 110 as it is unmatched to the common antenna at this setup.

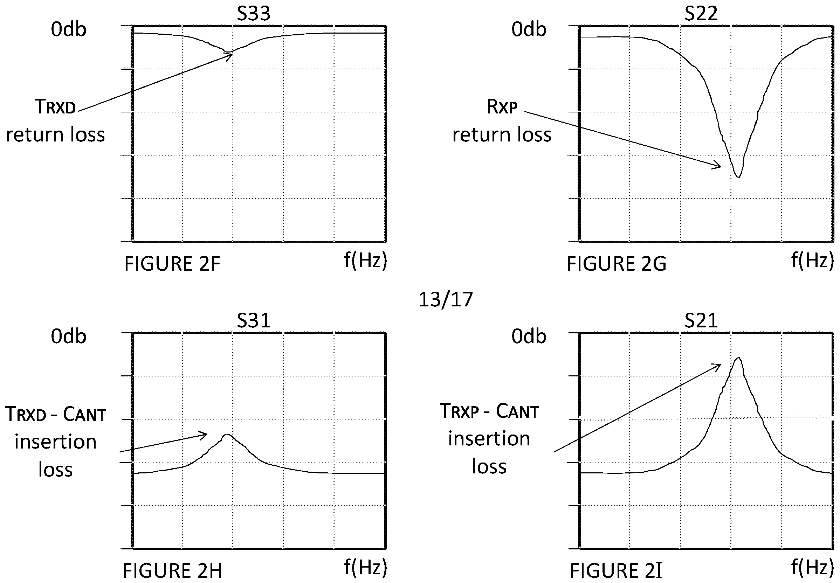

Figure 2F and 2G illustrate the return loss values of the communication unit 130 and the receiving unit 110 respectively according to the unmatched and match conditions for the given frequency band in the setup of Figure 2A. In this setup, the value and pattern obtained for the communication unit TRXD return loss S33 (db) indicate unmatched condition between the data transceiving unit and the common antenna. Therefore, most of the incident power at this setup is reflected back and no data is transmitted or received by the DUC. In contrast, the receiving unit RXP return loss S22 value (db) and pattern reflects matching condition between the common antenna and the power receiving unit meaning that a negligible amount of the incident power is being reflected back and that receiving RF power for charging is possible.

Figure 2H and 2I are graphs illustrating the insertion loss S31 between the communication unit TRXD and the common antenna CANT, and the insertion loss S21 between the RF power receiving unit RXP and the common antenna CANT respectively, in the charging zone setup of figure 2A. In this setup, most of the power received from the antenna is delivered to the RF power receiving unit and thus, the insertion loss S21 value is high (close to 0db). As such, the insertion loss S31 value between the communication unit TRXD and the common antenna CANT is relatively high since only negligible power received from the common antenna is delivered to the communication unit and most of the power is reflected back to the antenna.

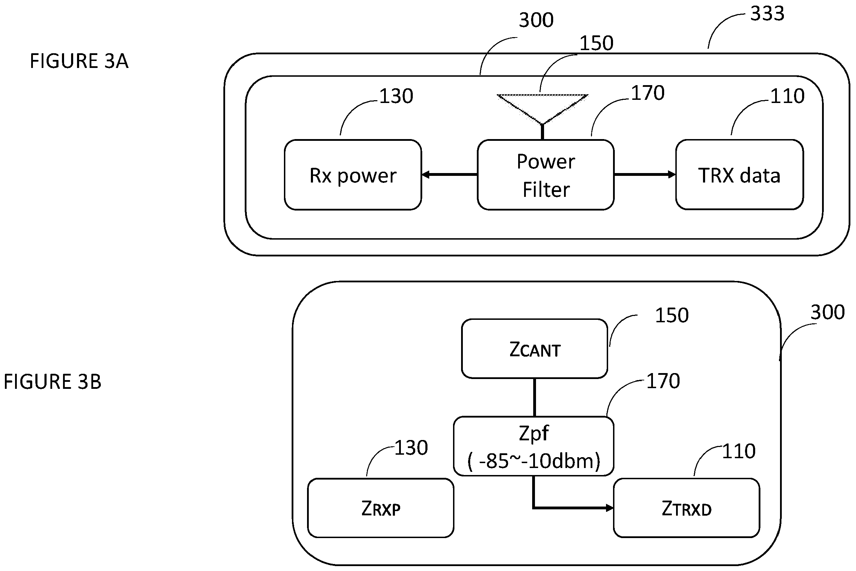

Figure 3A is a schematic illustration of one another optional implementation of the subject matter wherein, a combined communication and charging module 300 comprises RF power unit RXP, a high level communication unit TRX Data sharing a common antenna while the units are connected to the common antenna via a Power Filter, in a free space setup.

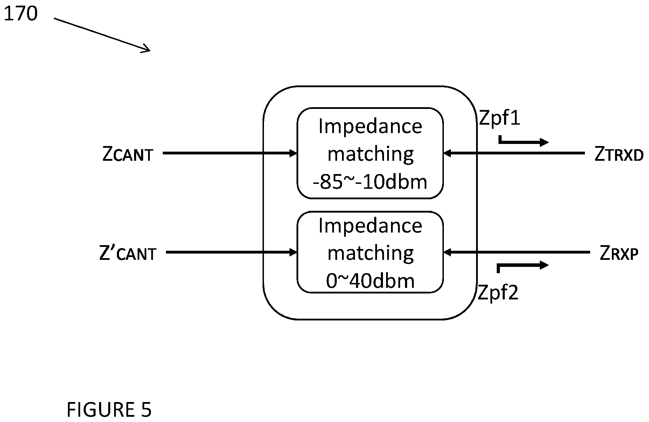

The power filter 300 provided herein is configured to filter the received signal according to its power level. In this manner, low power signals received by the common antenna are directed to the communication unit 110, while high power signals received by the common antenna 150 are directed to the RF power receiving unit 120. By this filtering, the power filter functionally isolate between the communication and the charging unit although both are connected to the same antenna and operate in a similar or adjacent frequency band. This functional isolation allow the co-existence of the two units and the sharing of common components without causing any harm to the communication unit that could have happen due to exposing of the unit to high power signals that are suitable for charging. A detailed description of the operation mode and characters of the power filter of the invention are provided with reference to figures 5-7 hereinbelow. Similar to the combined module 100 of figures 1 and 2, the combined module 300 is also configured and operable to be assembled in a device under charge 333.

Figure 3B is a schematic diagram illustrating the impedance reflected from the units illustrated in Figure 3A in a free space setup, wherein ZCANT is the impedance reflected from the common antenna 150, ZPF is the impedance of the power filter 170 when the received signal power level is in the range of (-85) to (-10) dbm, ZTRXD is the impedance of the data communication unit 110, and ZRXP is the impedance reflected from the RF power receiving unit 130.

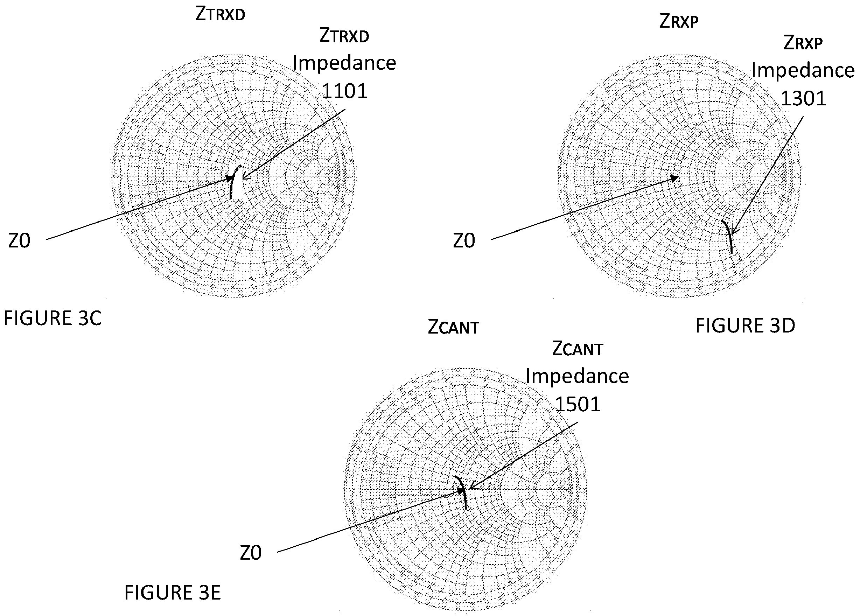

This condition is graphically illustrated by the Smith charts of Figures 3C-3E. The data communication unit 110 in this setup is matched to the common antenna 150 and thus, the curve denoting the reflected impedance ZTRXD 1101 is positioned on the center point Z0 of the Smith chart meaning optimal data transfer (Fig. 3C). The optimal match is achieved by the dual level isolation effect between the communication and the charging unit obtained by the environmental condition (free space setup) and further by the power filter. At the same setup, the RF power receiving unit 130 is located outside a charging zone and therefore, this unit is unmatched to the common antenna 150. Thus, in this setup the reflected impedance of the RF power receiving unit ZRXP 1301 is not equal to Z0 and indicated as a curve positioned away from the center point Z0 of the Smith chart meaning that only negligible power is received by the power receiving unit (Fig. 3D). The reflected impedance of common antenna ZCANT 1501 is equal to Z0 as illustrated in Figure 3E. In this setup, the common antenna150 is perfectly matched to the data transceiving unit (the communication unit) and thus, ZCANT is represented on the Smith chart as a curve positioned at the center point Z0 of the Smith chart, meaning that proper data transfer occurs between the common antenna and the communication unit.

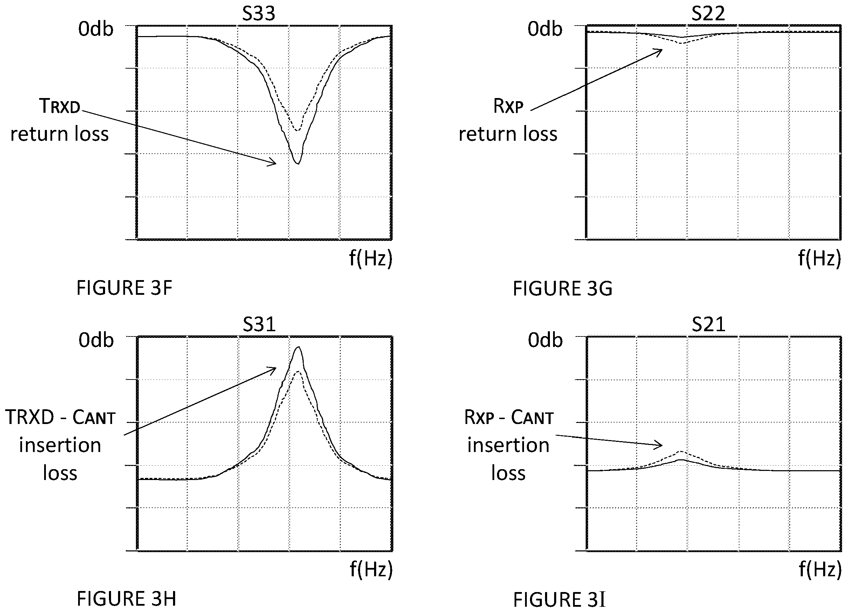

Figure 3F and 3G are graphs illustrating the return loss S33 and S22 of the communication unit TRXD and the RF power receiving unit RXP respectively, in the free space setup of figure 3A, wherein the additional effect of the power filter 170 (solid line) over the environmental effect (dotted line) on the impedance matching of the unit comprised in the combined module is shown.

In these graphs, the values and pattern obtained for the communication unit TRXD return loss S33 (db) indicate good match between TRXD and the common antenna in the environmental condition of a free space setup (dotted line) that is further improved by the power filter that allows only passage of low power signals in the free space setup, meaning that negligible amount of the incident power is being reflected back. In contrast, the power receiving unit RXP return loss S22 value is close to 0db and following the power filter effect it is even closer to 0 db as the filter prevents high power signals to pass through. The pattern obtained indicates unmatched condition meaning that almost all the incident power received from the common antenna is reflected back. Thus, in free space the common antenna functionally operates as a communication antenna and no charging is enabled and the power filter functionally improves the matched and the unmatched conditions within the units of the combined module.

Figure 3H and 3I are graphic illustrations of the insertion loss S31 and S21 in the free space set up of Figure 3A between the communication unit TRXD and the common antenna CANT connected to the power filter, and between the RF power receiving unit RXP and the common antenna CANT connected to the power filter respectively, wherein the addition of the power filter (solid line) over the environmental effect (dotted line) improves the transmission between the common antenna and the data communication unit. Most of the power received from the antenna is delivered to the communication unit and thus, the insertion loss value is minimal (close to 0db). The insertion loss S31 value even decreases following the power filter effect that functionally enables, in the free space setup, only low power signals to pass. Thus, the values obtained are even closer to 0 db (solid line) compared to the values obtained without the power filter (dotted line). As a result, the insertion loss S21 value between the RF power receiving unit RXP and the common antenna CANT is relatively high (dotted line) and further increases by the operation of the power filter (solid line), since only negligible power received from the common antenna is delivered to the power receiving unit and almost all of the power received is reflected back to the antenna.

Figure 4A is a schematic diagram illustrating the reflected impedances of the combined communication and charging module 300 with the power filter upon changing the environmental conditions of the DUC comprising said module and positioning the DUC within a wireless charging device (when the charging device is a close or semi close chamber), or onto a wireless charging device (when the charging device is a surface). In this setup, since the charging device comprises RF power transmitting module a charging zone is created that effect the impedance of the common antenna and consequently the operation mode of the module, as will be described in details below.

Figure 4A is a schematic block diagram of the major components relevant in this setup including wireless charging device 200 comprising transmitting antenna 220 and Tx power transmitter 210, a DUC 333 positioned within/onto wireless charging device 200 and comprising combined communication and charging module 300 containing a common antenna 150 connected to power receiving unit Rx 130 and to data receiving unit TRX Data 110 via a power filter 170. The impedance reflected from the components above are illustrated in Figure 4B, wherein ZTXA and ZTXP are the impedances reflected from the RF transmitting antenna and from the power transmitter of the RF transmitting unit respectively, Z'CANT is the impedance reflected from the common antenna while connected to the power filter, Z'pf is the impedance reflected from the power filter while the received signal power is in the range of (0) to (40) dbm, ZRXP is the impedance reflected from the RF receiving unit, and ZTRXD is the impedance reflected from the communication unit, all in the charging zone setup. At this setup the power filter is matched with the RF power receiving unit and as such, high power level signals (in the range of 0-40 dbm) are directed only to this unit. Concurrently, since the communication unit is in an unmatched condition with power filter 170, the received power is not directed to it by the filter and as a result, the communication unit is protected from possible damage that the high power signals received may cause to its electrical components.

The impedance match and unmatched of the units in this setup is further illustrated in Figures 4C-4E showing Smith charts illustration. In these charts, the reflected impedance of the data communication unit ZTRXD 1101 is denoted by a curve positioned away from the center of the chart Z0, reflecting an unmatched condition between this unit and the common antenna meaning that no communication is possible in this setup. The reflected impedance of the RF power receiving unit ZRXP 1301, and the reflected impedance of the common antenna Z'CANT 1501 are perfectly matched as both curves are positioned in the center of the chart equal to Z0, meaning that the common antenna efficiently delivers the received RF high power signals to the Rx power receiving unit. The position of the curve 1301 of the Rx power receiving unit at the center of the chart reflects the optimization of the impedance match between the unit thanks to the power filter connected between them that while in the charging zone setup it selectively allows only high power level signals to pass through.

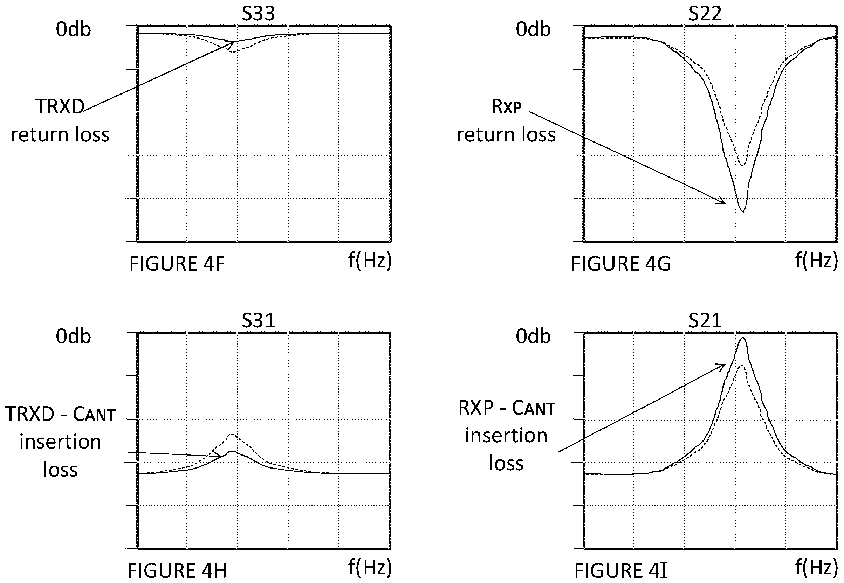

Figure 4F and 4G are graphs illustrating the return loss values S33 and S22 of the data communication unit TRXD and the RF power receiving unit RXP respectively, while in the charging zone setup (dotted lines) and with the additional effect of the power filter (solid lines). In the charging zone setup, the value and pattern obtained for the communication unit TRXD return loss S33 (db) indicate unmatched condition between the data transceiving unit and the common antenna. Therefore, most of the incident power at this setup is reflected back (dotted line). The addition of the power filter between the communication unit and the common antenna that selectively allows passage of high power level signals in this setup, further increases the return loss S33 as the value obtained is close to 0 db (solid line). In contrast, the receiving unit RXP return loss S22 value (db) and pattern reflect good match between the common antenna and the power receiving unit (dotted line) that is further being improved by the selectivity of the power filter, meaning that a negligible amount of the incident power is being reflected back and that RF power receiving for charging is possible in the charging zone setup.

Figure 4H and 4I are graphs illustrating the insertion loss S31 and S21 values between the communication unit TRXD and the common antenna CANT, and between the RF power receiving unit RXP and the common antenna CANT respectively, while the DUC comprising the units is positioned in the vicinity or within the charging device (dotted lines), and with the additional effect of the power filter (solid lines). As shown, most of the power received from the antenna is delivered to the RF power receiving unit and thus, the insertion loss S21 value is maximal (close to 0db) and it is further improved with the additional selectivity of the power filter. On the contrary, the insertion loss S31 value between the communication unit TRXD and the common antenna CANT is relatively high since only negligible power received from the common antenna is delivered to the communication unit (dotted line) and it is further increased by the operation of the power filter (solid line) as most of the power received by the antenna is delivered via the filter to the charging unit and the rest of the received signal is reflected back due to unmatched condition between the communication unit and the power filter and the communication unit and the common antenna while positioned within the charging zone.

Figure 5 is a schematic block diagram illustrating the operation region of power filter 170. In the example illustrated herein, power filter 170 comprises at least two predesigned impedance matching blocks Zpf1 and Zpf2. The first block having impedance matching Zpf1 is configured to operate in power levels between (-85) dbm to (-10) dbm. At these power levels, Zpf1 is matched to the impedance of the common antenna ZCANT in a free space setup and also to the impedance reflected from the communication unit. Thus signals received from the antenna in this power level range may pass through the filter toward the communication unit to allow data transfer. The second block having impedance matching Zpf2 is configured to operate in power levels between (0) dbm to (40) dbm. At these power levels, Zpf2 is matched to the impedance of the common antenna Z'CANT in a charging zone setup, and also to the impedance reflected from the Rx power receiving unit. Thus signals received from the antenna in this power level range may pass through the filter toward the Rx power unit to allow charging of the DUC.

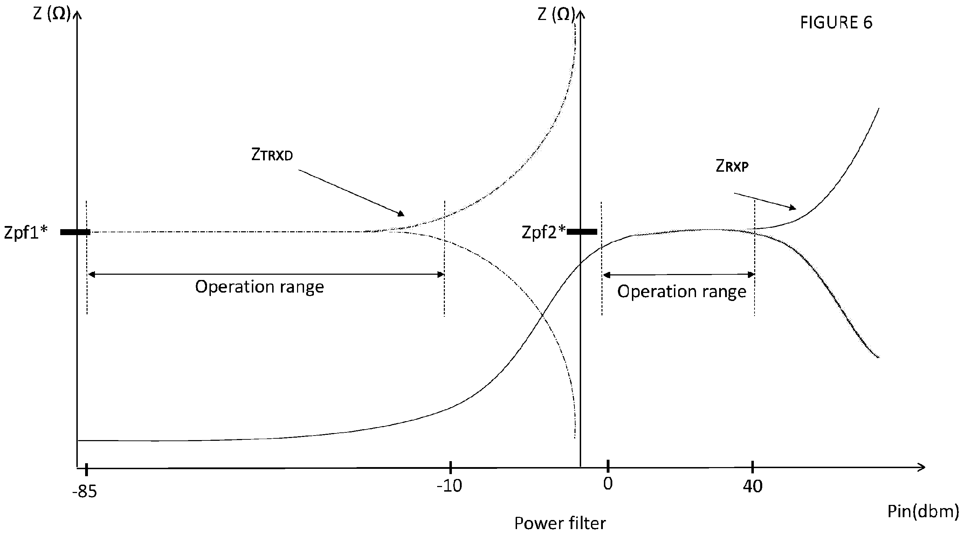

Figure 6 is a graphic illustration of the impedance of the power filter, the communication unit, and the charging unit according to the power levels of the received signal (dbm). As both units are configured to operate in adjacent/identical frequencies, in order to obtain a good communication ability and also efficient wireless charging to the DUC, the impedance of each of the communication unit and the Rx power receiving unit should be matched to the impedance of the common antenna according to the power level of the received signals, in addition to the impedance match/un-match of the units as a result of the environmental effects on the unit's impedance (free space setup or charging zone setup) as described in details with reference to Figures 1-5 above.

In the specific example illustrated herein, the conjugate impedance of the power filter terminal Zpf1* is configured to be matched to the impedance of the communication unit ZTRXD in low power levels between the range of (-85) to (-10) dbm in free space setup. This range is the operation range of the communication unit and thus, the power filter is matched to it, shown as a single dotted line. When the power level of the received signal rises above (-10) db, the communication unit exceeds its operation range, thus its impedance ZTRXD is being dramatically changed and unmatched condition occurs. In that situation the communication unit is unmatched to Zpf1*.

At the range of (-85) to (-10) dbm the Rx power receiving unit is unmatched to the power filter and only when the power level of the received signal rises, the conjugate impedance of the power filter Zpf2* is matched to the reflected impedance of the Rx power receiving unit in the charging zone setup. The matched condition occurs in the range between (0) dbm to (40) dbm, which is the operation range of ZRXP shown as a single solid line. When the power level of the received signal rises above (40) db the charging unit exceeds its operation range, thus its impedance ZRXP is being dramatically changed and unmatched condition occurs. In that situation the charging unit is unmatched to Zpf2*.

In a single isolation mode, where the environment in the surroundings of the DUC is constant (i.e. no environmental changes occur), the impedance of the signal source is constant, the impedances Zpf1* equals Zpf2* and the isolation depends solely on the filtering operation of the power filter according to the match and unmatched condition of the communication unit and the power receiving unit operation ranges.

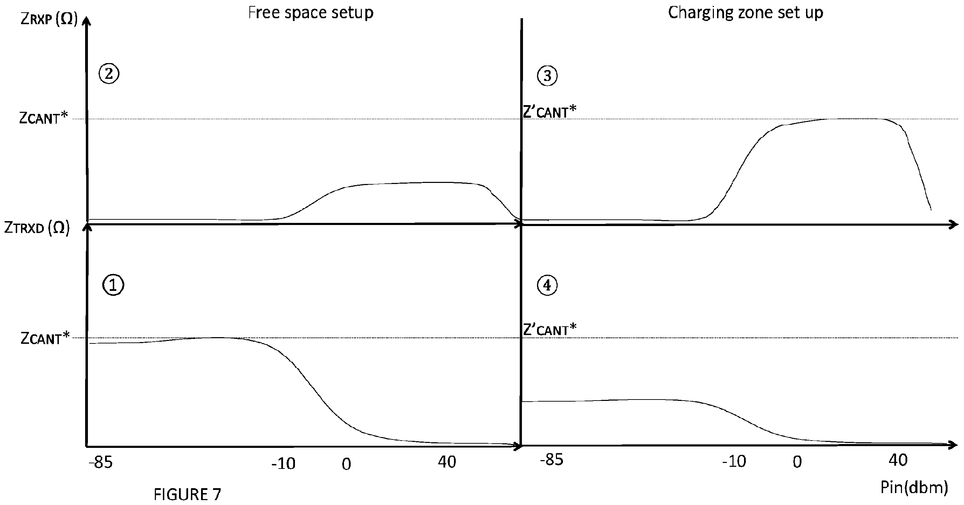

Figure 7 is a graphical illustration summarizing the dual isolation effect between the communication unit and the charging unit of the combined module, although both units are sharing a common antenna and operate in adjacent/identical frequency band. The graph is divided to four sub-graphs illustrating the impedance changes (Y axis) of the different components of the combined module with the power filter according to the power level of the received signal (X axis), in two setups: a free space setup; and inside/onto a charging device (a charging zone setup).

In the free space setup (graphs ①②) the reflected impedance of the data communication unit ZTRXD is matched to the conjugate impedance of the common antenna ZCANT* as long as the power level of the received signal is in the range of (-85) to (-10) dbm (graph ①). In this range, maximal match is achieved and optimal data communication may occur. When the power level of the received signal increases at the same setup, the impedance ZTRXD of the communication unit changes, and is no longer matched to the conjugate impedance ZCANT* of the common antenna unit.

When the power level of the received signal is in the range of (0) to (40) dbm (graph ②), the impedance of the Rx power receiving unit ZRXP changes but yet remains unmatched to the conjugate impedance ZCANT* as the DUC is not inside/onto a charging device (i.e. not within a charging zone) and the impedance change of the RXP unit is obtained only due to the filtering operation of power filter.

When the environmental setup changes (graphs ③④) and the DUC is positioned within or onto a wireless charging device (within a charging zone), the match between the conjugate impedance of the common antenna and the Rx Power receiving unit is high (ZRXP = Z'CANT*) as long as the received signal power is in the range of (0) to (40) dbm.

Within the charging zone setup, when the power level of the received signal is in the range of (-85) to (-10) dbm the impedance of the receiving power unit changes and no match between the Rx power receiving unit and the conjugate impedance of the common antenna occurs.

The impedance of the communication unit ZTRXD in this range, also changes but yet remains unmatched to the conjugate impedance Z'CANT* as the DUC is inside/onto a charging device (i.e. within a charging zone) and the impedance change of the communication unit is obtained only due to the filtering operation of power filter (graph ④).

It should be clear that the description of the embodiments and attached Figures set forth in this specification serves only for a better understanding of the invention, without limiting its scope. It should also be clear that a person skilled in the art, after reading the present specification could make adjustments or amendments to the attached Figures and above described embodiments that would still be covered by the present invention.

## Claims

1. A combined communication and charging module (100; 300) for a wireless rechargeable device (111), the module being configured to allow radio frequency (RF) charging and data transceiving in an identical frequency or adjacent frequencies, said combined communication and charging module (100; 300) comprising a common antenna (150), a charging unit (130) and a communication unit (110), both units (130, 110) sharing the common antenna (150), wherein said units (130, 110) are configured to perform their operation alternately and determined by an environmental effect;
wherein said environmental effect is the presence or absence of a wireless charging device (200) and the creation of a charging zone in the surroundings of said combined communication and charging module (100; 300) such that said common antenna (150) is within or outside said charging zone; **characterized in that**
said combined communication and charging module is configured such that:
the presence of said common antenna (150) within said charging zone functionally affects the impedance of said common antenna (150) to match with the impedance of the charging unit (130) and to allow wireless charging of a rechargeable device (111), and further to mismatch with the impedance of the communication unit (110) to limit or attenuate signals reception by the communication unit (110);
and the absence of a charging zone in the surroundings of said common antenna (150) affects the impedance of said common antenna (150) to match with the impedance of said communication unit (110) and to allow data transceiving, and further to mismatch with the impedance of said charging unit (130) to limit or attenuate signals reception by the charging unit (130).

2. A combined communication and charging module according to claim 1, wherein said units (130, 110) are further configured to perform their operation alternately and determined by filtering of signals received according to their strength.

3. A combined communication and charging module (100; 300) according to claim 2, wherein said filtering of signals received according to their strength is obtained by a power filter (170) functionally attached to said common antenna (150) and to said charging and communication units (130, 110), wherein said power filter (170) is configured to pass the signals received either to the communication unit (110) or to the charging unit (130) according to a predetermined power levels such that low power signals suitable for communication are being passed to said communication unit (110), while high power signals suitable for charging are being passed to said charging unit (130).

4. A combined communication and charging module (100; 300) according to claim 3, wherein in the absence of a charging zone in the surroundings of said common antenna (150) said power filter is configured to pass low power signals from said common antenna (150) to said communication unit (110) by matching the operation range impedance of said communication unit (110) to the impedance of said common antenna (150).

5. A combined communication and charging module (100; 300) according to claim 3, wherein in the presence of a charging zone in the surroundings of said common antenna (150) said power filter is configured to pass high power signals from said common antenna (150) to said charging unit by matching the operation range impedance of said charging unit (130) to the impedance of said common antenna (150).

6. A rechargeable device (111) comprising a combined communication and charging module (100; 300) according to any one of claims 1-5.

7. A method for enabling radio frequency (RF) wireless charging and data transceiving in identical or adjacent frequency band of a wirelessly rechargeable device (111) having a combined communication and charging module (100; 300) according to any one of claims 1 to 5, said method comprising the following steps:
a. Positioning said wirelessly rechargeable device (111) away from a charging zone so as to allow said common antenna (150) to operate as a communication antenna; and
b. Positioning said wirelessly rechargeable device (111) within/onto a wireless charging device (200) so as to allow said common antenna (150) to operate as a RF charging power receiving antenna.

8. A combined communication and charging module (100; 300) according to claim 3, wherein said power filter (170) is configured to selectively pass signals according to their power levels to the communication unit (110) or to the charging unit (130) sharing a common signal source in the combined communication and charging module (100; 300).

9. A combined communication and charging module (100; 300) according to claim 8, wherein said power filter (170) is configured to pass low power signals received by matching between the impedance of the operation range of the communication unit (110) to the impedance of the common signal source, and further to pass high power signals received by matching between the impedance of the operation range of the charging unit (130) to the impedance of the common signals source.

10. A combined communication and charging module (100; 300) according to claim 8, wherein the impedance of said common signal source is constant.

## Patentansprüche

1. Kombiniertes Kommunikations- und Lademodul (100; 300) für ein drahtloses wiederaufladbares Gerät (111), wobei das Modul dafür konfiguriert ist, das Laden von Hochfrequenzen (HF) und das Senden und Empfangen von Daten auf einer identischen Frequenz oder auf benachbarten Frequenzen zu ermöglichen, wobei das kombinierte Kommunikations- und Lademodul (100; 300) eine gemeinsame Antenne (150), eine Ladeeinheit (130) und eine Kommunikationseinheit (110) umfasst, wobei beide Einheiten (130, 110) sich die gemeinsame Antenne (150) teilen, wobei die Einheiten (130, 110) dafür konfiguriert sind, ihren Betrieb abwechselnd durchzuführen und durch einen Umgebungseinfluss zu bestimmen;
wobei der Umgebungseinfluss das Vorhandensein oder Fehlen einer drahtlosen Ladevorrichtung (200) und die Schaffung eines Ladebereichs in der Umgebung des kombinierten Kommunikations- und Lademoduls (100; 300) ist, sodass die gemeinsame Antenne (150) innerhalb oder außerhalb des Ladebereichs liegt;
**dadurch gekennzeichnet, dass** das kombinierte Kommunikations- und Lademodul dafür konfiguriert ist:
das Vorhandensein der gemeinsamen Antenne (150) innerhalb des Ladebereichs die Impedanz der gemeinsamen Antenne (150) funktionell zu beeinflussen, um sich an die Impedanz der Ladeeinheit (130) anzupassen und ein drahtloses Laden einer wiederaufladbaren Vorrichtung (111) zu ermöglichen, und um ferner eine Fehlanpassung an die Impedanz der Kommunikationseinheit (110) zu ermöglichen, um den Signalempfang durch die Kommunikationseinheit (110) zu begrenzen oder zu dämpfen;
das Fehlen eines Ladebereichs in der Umgebung der gemeinsamen Antenne (150) die Impedanz der gemeinsamen Antenne (150) zu beeinflussen, um sich an die Impedanz der Kommunikationseinheit (110) anzupassen und das Senden und Empfangen von Daten zu ermöglichen, und weiterhin eine Fehlanpassung an die Impedanz der Ladeeinheit (130) zu ermöglichen, um den Signalempfang durch die Ladeeinheit (130) zu begrenzen oder zu dämpfen.

2. Kombiniertes Kommunikations- und Lademodul nach Anspruch 1, wobei die Einheiten (130, 110) ferner dafür konfiguriert sind, ihren Betrieb abwechselnd auszuführen und durch Filtern der empfangenen Signale entsprechend ihrer Stärke zu bestimmen.

3. Kombiniertes Kommunikations- und Lademodul (100; 300) nach Anspruch 2, wobei die Filterung von Signalen, die entsprechend ihrer Stärke empfangen werden, durch ein Leistungsfilter (170) erhalten wird, das funktionell an die gemeinsame Antenne (150) und an die Lade- und Kommunikationseinheiten (130, 110) angeschlossen ist, wobei der Leistungsfilter (170) dafür konfiguriert ist, die empfangenen Signale entweder zu der Kommunikationseinheit (110) oder an die Ladeeinheit (130) entsprechend einem vorbestimmten Leistungspegel durchzulassen, sodass Niederleistungssignale, die für die Kommunikation geeignet sind, zur Kommunikationseinheit (110) durchgelassen werden, während Hochleistungssignale, die zum Laden geeignet sind, zu der Ladeeinheit (130) durchgelassen werden.

4. Kombiniertes Kommunikations- und Lademodul (100; 300) nach Anspruch 3, wobei in Abwesenheit eines Ladebereichs in der Umgebung der gemeinsamen Antenne (150) der Leistungsfilter dafür konfiguriert ist, Niederleistungssignale von der gemeinsamen Antenne (150) zu der Kommunikationseinheit (110) durch Anpassung der Betriebsbereichsimpedanz der Kommunikationseinheit (110) an die Impedanz der gemeinsamen Antenne (150) durchzulassen.

5. Kombiniertes Kommunikations- und Lademodul (100; 300) nach Anspruch 3, wobei bei Vorhandensein eines Ladebereichs in der Umgebung der gemeinsamen Antenne (150) der Leistungsfilter dafür konfiguriert ist, Hochleistungssignale von der gemeinsamen Antenne (150) zu der Ladeeinheit durch Anpassung der Betriebsbereichsimpedanz der Ladeeinheit (130) an die Impedanz der gemeinsamen Antenne (150) durchzulassen.

6. Wiederaufladbare Vorrichtung (111) mit einem kombinierten Kommunikations- und Lademodul (100; 300) nach einem der Ansprüche 1-5.

7. Verfahren zum Ermöglichen des drahtlosen Ladens und Sendens und Empfangens von Daten mittels Hochfrequenz (HF) auf einem identischen oder benachbarten Frequenzband einer drahtlos wiederaufladbaren Vorrichtung (111) mit einem kombinierten Kommunikations- und Lademodul (100; 300) nach einem der Ansprüche 1 bis 5, wobei das Verfahren die folgenden Schritte umfasst:
a. Positionieren der drahtlos wiederaufladbaren Vorrichtung (111) entfernt von einem Ladebereich, so dass die gemeinsame Antenne (150) als Kommunikationsantenne arbeiten kann; und
b. Positionieren der drahtlos wiederaufladbaren Vorrichtung (111) innerhalb/auf einer drahtlosen Ladevorrichtung (200), so dass die gemeinsame Antenne (150) als eine HF-Ladeleistungs-Empfangsantenne betrieben werden kann.

8. Kombiniertes Kommunikations- und Lademodul (100; 300) nach Anspruch 3, wobei der Leistungsfilter (170) dafür konfiguriert ist, selektiv Signale entsprechend ihrer Leistungspegel zu der Kommunikationseinheit (110) oder zu der Ladeeinheit (130) durchzulassen, die sich eine gemeinsame Signalquelle in dem kombinierten Kommunikations- und Lademodul (100; 300) teilen.

9. Kombiniertes Kommunikations- und Lademodul (100; 300) nach Anspruch 8, wobei der Leistungsfilter (170) dafür konfiguriert ist, Niederleistungssignale, die durch Anpassung zwischen der Betriebsbereichsimpedanz der Kommunikationseinheit (110) und der Impedanz der gemeinsamen Signalquelle empfangen werden, durchzulassen und ferner Hochleistungssignale, die durch Anpassung zwischen der Betriebsbereichsimpedanz der Ladeeinheit (130) und der Impedanz der gemeinsamen Signalquelle empfangen werden, durchzulassen.

10. Kombiniertes Kommunikations- und Lademodul (100; 300) nach Anspruch 8, wobei die Impedanz der gemeinsamen Signalquelle konstant ist.

## Revendications

1. Module combiné de communication et de charge (100 ; 300) pour un dispositif rechargeable sans fil (111), le module étant configuré pour permettre la charge radiofréquence (RF) et l'émission-réception de données à une fréquence identique ou des fréquences adjacentes, ladite communication combinée et ledit module de charge (100 ; 300) comprenant une antenne commune (150), une unité de charge (130) et une unité de communication (110), les deux unités (130, 110) partageant l'antenne commune (150), lesdites unités (130, 110) étant configurées pour fonctionner en alternance et de façon déterminée par un effet environnemental ;
ledit effet environnemental étant la présence ou l'absence d'un dispositif de charge sans fil (200) et la création d'une zone de charge dans l'entourage dudit module combiné de communication et de charge (100 ; 300) de telle sorte que ladite antenne commune (150) se trouve à l'intérieur ou à l'extérieur de ladite zone de charge ;
**caractérisé en ce que** ledit module combiné de communication et de charge est configuré de telle sorte que :
la présence de ladite antenne commune (150) dans ladite zone de charge affecte fonctionnellement l'impédance de ladite antenne commune (150) de façon à ce qu'elle corresponde à l'impédance de l'unité de charge (130) et à ce qu'elle permette la charge sans fil d'un dispositif rechargeable (111), et en outre de façon à ce qu'elle ne corresponde pas à l'impédance de l'unité de communication (110) afin de limiter ou d'affaiblir la réception de signaux par l'unité de communication (110) ;
et l'absence d'une zone de charge dans l'entourage de ladite antenne commune (150) affecte l'impédance de ladite antenne commune (150) de façon à ce qu'elle corresponde à l'impédance de ladite unité de communication (110) et de façon à ce qu'elle permette la transmission de données, et en outre de façon à ce qu'elle ne corresponde pas à l'impédance de ladite unité de charge (130) afin de limiter ou d'affaiblir la réception de signaux par l'unité de charge (130).

2. Module combiné de communication et de charge selon la revendication 1, dans lequel lesdites unités (130, 110) sont en outre configurées pour fonctionner en alternance et de façon déterminée par filtrage des signaux reçus en fonction de leur intensité.

3. Module combiné de communication et de charge (100 ; 300) selon la revendication 2, dans lequel ledit filtrage des signaux reçus en fonction de leur intensité est obtenu par un filtre de puissance (170) fonctionnellement relié à ladite antenne commune (150) et auxdites unités de charge et de communication (130, 110), ledit filtre de puissance (170) étant configuré pour transmettre les signaux reçus soit à l'unité de communication (110) soit à l'unité de charge (130) en fonction des niveaux de puissance prédéterminés, de telle sorte que des signaux de faible puissance appropriés pour la communication sont transmis à ladite unité de communication (110), tandis que des signaux de haute puissance appropriés pour la charge sont transmis à ladite unité de charge (130).

4. Module combiné de communication et de charge (100 ; 300) selon la revendication 3, dans lequel, en l'absence d'une zone de charge dans l'entourage de ladite antenne commune (150), ledit filtre de puissance est configuré pour transmettre des signaux de faible puissance à partir de ladite antenne commune (150) à ladite unité de communication (110) en adaptant l'impédance de la plage de fonctionnement de ladite unité de communication (110) à l'impédance de ladite antenne commune (150).

5. Module combiné de communication et de charge (100 ; 300) selon la revendication 3, dans lequel, en présence d'une zone de charge dans l'entourage de ladite antenne commune (150), ledit filtre de puissance est configuré pour transmettre des signaux de haute puissance à partir de ladite antenne commune (150) à ladite unité de charge en faisant correspondre l'impédance de la plage de fonctionnement de ladite unité de charge (130) à l'impédance de ladite antenne commune (150).

6. Dispositif rechargeable (111) comprenant un module combiné de communication et de charge (100 ; 300) selon l'une quelconque des revendications 1 à 5.

7. Procédé permettant la charge radiofréquence (RF) sans fil et la transmission de données dans une bande de fréquences identique ou adjacente d'un dispositif rechargeable sans fil (111) comportant un module combiné de communication et de charge (100 ; 300) selon l'une quelconque des revendications 1 à 5, ledit procédé comprenant les étapes suivantes :
a. le positionnement dudit dispositif rechargeable sans fil (111) à distance d'une zone de charge afin de permettre à ladite antenne commune (150) de fonctionner comme une antenne de communication ; et
b. le positionnement dudit dispositif rechargeable sans fil (111) à l'intérieur/sur un dispositif de charge sans fil (200) afin de permettre à ladite antenne commune (150) de fonctionner comme une antenne de réception de puissance de charge RF.

8. Module combiné de communication et de charge (100 ; 300) selon la revendication 3, dans lequel ledit filtre de puissance (170) est configuré pour transmettre sélectivement des signaux en fonction de leurs niveaux de puissance à l'unité de communication (110) ou à l'unité de charge (130) partageant une source commune de signaux dans le module combiné de communication et de charge (100 ; 300).

9. Module combiné de communication et de charge (100 ; 300) selon la revendication 8, dans lequel ledit filtre de puissance (170) est configuré pour transmettre des signaux de faible puissance reçus en faisant correspondre l'impédance de la plage de fonctionnement de l'unité de communication (110) à l'impédance de la source commune de signaux, et en outre pour transmettre des signaux de haute puissance reçus en faisant correspondre l'impédance de la plage de fonctionnement de l'unité de charge (130) à l'impédance de la source commune de signaux.

10. Module combiné de communication et de charge (100 ; 300) selon la revendication 8, dans lequel l'impédance de ladite source commune de signaux est constante.
